# EUROPEAN PATENT APPLICATION

(11) **EP 4 682 583 A1**
(43) Date of publication of application: **21.01.2026**
(21) Application number: 25189945.6
(22) Date of filing: 16.07.2025
(51) Int. Cl.: G01S 7/481, G01S 7/4912, G01S 17/42, G01S 17/894, G01S 7/48, G01S 7/4863, G01S 7/4914

(54) **SENSING ELEMENT WITH VCSEL INTEGRATED DETECTOR ARRAY AND SELF-MIXING INTERFEROMETRY**

(30) Priority: 17.07.2024 US 202463672475 P
(71) Applicant: II-VI Delaware, Inc., Wilmington, DE 19890 (US)
(72) Inventor: Lichtenstein, Norbert, Wilmington, 19890 (US); Boucart, Julien, Wilmington, 19890 (US)
(74) Representative: Forresters IP LLP

(57) **Abstract**

Provided are sensing elements with at least one integrated detector array, methods of using such sensing elements, and systems including such sensing elements. An example sensing element includes a plurality of vertical-cavity surface-emitting lasers (VCSELs). Each VCSEL of the plurality of VCSELs includes an emitter and a photodetector. Each VCSEL of the plurality of VCSELs is configured to generate a self-mixing interferometry (SMI) signal.

## Description

### CROSS REFERENCE TO RELATED APPLICATION

This application claims priority to United States Provisional Patent Application No. 63/672,475, filed July 17, 2024, the disclosure of which is hereby incorporated by reference in its entirety.

### BACKGROUND

### 1. Technical Field

This disclosure relates generally to sensing elements and, in some non-limiting embodiments or aspects, to a sensing element with at least one integrated detector array.

### 2. Technical Considerations

Three-dimensional (3D) sensing applications rely on the determination of the distance and the direction (e.g., angular direction) of an object. For example, time-of-flight (TOF) determines the distance by measuring the time from emitting a signal to receiving a return signal (e.g., reflected signal) at the origination using a fast detector. Dot projectors rely on the distortion and the separation of a known pattern on the surface of an object using a (relatively slow) two-dimensional (2D) camera. A combination of TOF and dot projectors requires a fast 3D camera system, which is complicated and costly. Moreover, having a detector and/or camera separate from an emitter results in increased size. Also, when a detector and/or camera is separate from an emitter, the return signal is not received at the same place from which it is emitted, resulting in parallax.

Self-mixing interferometry (SMI) combines a vertical-cavity surface-emitting laser (VCSEL) with a photodetector inside the cavity of a VCSEL. A returning signal is interfering with the internal mode of the VCSEL, creating changes of the power, the threshold current, and/or the operating voltage of such device, allowing detection of distance and velocity of an object, but not the dimension or shape of the object. As such, the usefulness for 3D sensing is limited.

### SUMMARY

Accordingly, provided are improved sensing elements with at least one integrated detector array, methods of using such sensing elements, and systems including such sensing elements.

According to non-limiting embodiments or aspects, provided is a sensing element with at least one integrated detector array. An example sensing element may include a plurality of vertical-cavity surface-emitting lasers (VCSELs). Each VCSEL of the plurality of VCSELs may include an emitter and a photodetector. Each VCSEL of the plurality of VCSELs may be configured to generate a self-mixing interferometry (SMI) signal.

In some non-limiting embodiments or aspects, the emitter of each VCSEL of the plurality of VCSELs may be configured to emit an emitted signal. Each VCSEL of the plurality of VCSELs may be configured to receive a reflected signal based on the emitted signal. The photodetector of each VCSEL of the plurality of VCSELs may be configured to generate the SMI signal based on at least one of: the emitted signal, the reflected signal, or any combination thereof.

In some non-limiting embodiments or aspects, the reflected signal may interfere with the emitted signal to cause a modulation. The SMI signal may be based on the modulation.

In some non-limiting embodiments or aspects, the modulation may include at least one of: an amplitude modulation, a frequency modulation, or any combination thereof.

In some non-limiting embodiments or aspects, the plurality of VCSELs may be arranged in an array.

In some non-limiting embodiments or aspects, each VCSEL of the plurality of VCSELs may be individually addressable.

In some non-limiting embodiments or aspects, the emitter of each VCSEL of the plurality of VCSELs may be turned on and off in a predetermined sequence to provide individual emitted beams separated by angle of emission.

In some non-limiting embodiments or aspects, the emitter of at least one VCSEL of the plurality of VCSELs may be configured to emit through a top side of the sensing element.

In some non-limiting embodiments or aspects, the emitter of at least one VCSEL of the plurality of VCSELs may be configured to emit through a bottom side of the sensing element.

In some non-limiting embodiments or aspects, the emitter of at least one VCSEL may be configured to emit through a substrate at the bottom side of the sensing element.

In some non-limiting embodiments or aspects, each photodetector may include at least one of: a photodiode, a PIN photodiode, or any combination thereof.

In some non-limiting embodiments or aspects, the emitter of each VCSEL of the plurality of VCSELs is connected to a respective cathode and a respective anode.

In some non-limiting embodiments or aspects, the photodetector of each VCSEL of the plurality of VCSELs may be connected to a respective cathode and a respective anode.

In some non-limiting embodiments or aspects, the photodetector of at least one VCSEL of the plurality of VCSELs may share at least one of the respective cathode or the respective anode with the emitter of the of at least one VCSEL.

In some non-limiting embodiments or aspects, at least one optical element may be configured to at least one of: steer an emitted signal from the emitter of at least one VCSEL of the plurality of VCSELs, polarize the emitted signal from the emitter of the at least one VCSEL of the plurality of VCSELs, or any combination thereof.

In some non-limiting embodiments or aspects, the at least one optical element may include at least one grating configured to polarize the emitted signal from the emitter of the at least one VCSEL of the plurality of VCSELs.

In some non-limiting embodiments or aspects, each of the at least one grating may be configured to polarize the emitted signal in one direction.

In some non-limiting embodiments or aspects, each of the at least one grating may be configured to polarize the emitted signal in one of two orthogonal directions.

In some non-limiting embodiments or aspects, the emitter of at least one VCSEL of the plurality of VCSELs may be configured to emit through a bottom side of the sensing element. The at least one grating may be formed on an epitaxial side of a quantum well opposite a substrate of the sensing element.

In some non-limiting embodiments or aspects, the at least one optical element may include at least one collimating element for each emitter of each VCSEL of the plurality of VCSELs.

In some non-limiting embodiments or aspects, the emitter of at least one VCSEL of the plurality of VCSELs may be configured to emit through a bottom side of the sensing element. The at least one collimating element may be formed in a substrate of the sensing element.

In some non-limiting embodiments or aspects, the at least one collimating element may be configured to direct an emitted signal from the emitter of a respective VCSEL of the plurality of VCSELs in a respective angular offset direction relative to a normal of a surface of the sensing element.

In some non-limiting embodiments or aspects, the at least one collimating element may include at least one of a collimating lens, a meta-optical element, or any combination thereof.

In some non-limiting embodiments or aspects, the at least one collimating element may include part of a hybrid lens array attached to the sensing element.

In some non-limiting embodiments or aspects, the sensing element may be at least partially formed by at least one of a semiconductor wafer, an integrated circuit chip, or any combination thereof. The at least one collimating element may be attached to the plurality of VCSELs on a wafer level or a chip level.

In some non-limiting embodiments or aspects, circuitry may be configured to disentangle the SMI signal of each VCSEL of the plurality of VCSELs by at least one of: direction, distance, polarization, velocity, or any combination thereof of at least one object in a respective direction of an emitted signal from the emitter of each VCSEL of the plurality of VCSELs.

In some non-limiting embodiments or aspects, the sensing element is at least partially formed by at least one of a semiconductor wafer, an integrated circuit chip, or any combination thereof.

According to non-limiting embodiments or aspects, provided is a method for using a sensing element including a plurality of VCSELs, each comprising an emitter and a photodetector. An example method may include emitting (e.g., with the emitter of each VCSEL of the plurality of VCSELs) an emitted signal, receiving (e.g., with each VCSEL of the plurality of VCSELs) a reflected signal based on the emitted signal, and/or generating (e.g., with the photodetector of each VCSEL of the plurality of VCSELs) an SMI signal for each VCSEL of the plurality of VCSELs based on at least one of: the emitted signal, the reflected signal, or any combination thereof.

In some non-limiting embodiments or aspects, the reflected signal may interfere with the emitted signal to cause a modulation. The SMI signal may be based on the modulation.

In some non-limiting embodiments or aspects, the modulation may include at least one of: an amplitude modulation, a frequency modulation, or any combination thereof.

In some non-limiting embodiments or aspects, each VCSEL of the plurality of VCSELs may be individually addressable. The emitter of each VCSEL of the plurality of VCSELs may be turned on and off in a predetermined sequence to provide individual emitted beams separated by angle of emission.

In some non-limiting embodiments or aspects, an emitted signal from the emitter of at least one VCSEL of the plurality of VCSELs may be steered with at least one collimating element.

In some non-limiting embodiments or aspects, the emitted signal from the emitter of the at least one VCSEL of the plurality of VCSELs may be polarized with at least one grating.

In some non-limiting embodiments or aspects, the SMI signal of each VCSEL of the plurality of VCSELs may be disentangled by at least one of: direction, distance, polarization, velocity, or any combination thereof of at least one object in a respective direction of the emitted signal from the emitter of each VCSEL of the plurality of VCSELs.

In some non-limiting embodiments or aspects, a plurality of three-dimensional points may be generated based on the SMI signals from the plurality of VCSELs.

In some non-limiting embodiments or aspects, a three-dimensional image may be generated based on the plurality of three-dimensional points.

According to non-limiting embodiments or aspects, provided is a system. An example system may include a computing device and a sensing element connected to the computing device. The sensing element may be as described herein. For example, the sensing element may include a plurality of VCSELs, and each VCSEL of the plurality of VCSELs may include an emitter and a photodetector. Each VCSEL of the plurality of VCSELs may be configured to generate an SMI signal.

In some non-limiting embodiments or aspects, the computing device may include at least one of a smartphone, a tablet computer, a laptop computer, a desktop computer, a wearable computing device, or any combination thereof.

In some non-limiting embodiments or aspects, the computing device may include a display, and wherein the sensing element is behind the display.

In some non-limiting embodiments or aspects, at least one aperture may be defined in the display in front of the sensing element.

Further non-limiting embodiments or aspects are set forth in the following numbered clauses:
Clause 1: A sensing element with at least one integrated detector array, comprising: a plurality of vertical-cavity surface-emitting lasers (VCSELs), each VCSEL of the plurality of VCSELs comprising: an emitter; and a photodetector, wherein each VCSEL of the plurality of VCSELs is configured to generate a self-mixing interferometry (SMI) signal.
Clause 2: The sensing element of clause 1, wherein the emitter of each VCSEL of the plurality of VCSELs is configured to emit an emitted signal, wherein each VCSEL of the plurality of VCSELs is configured to receive a reflected signal based on the emitted signal, and wherein the photodetector of each VCSEL of the plurality of VCSELs is configured to generate the SMI signal based on at least one of: the emitted signal, the reflected signal, or any combination thereof.
Clause 3: The sensing element of clause 1 or clause 2, wherein the reflected signal interferes with the emitted signal to cause a modulation, and wherein the SMI signal is based on the modulation.
Clause 4: The sensing element of any of clauses 1-3, wherein the modulation comprises at least one of: an amplitude modulation, a frequency modulation, or any combination thereof.
Clause 5: The sensing element of any of clauses 1-4, wherein the plurality of VCSELs is arranged in an array.
Clause 6: The sensing element of any of clauses 1-5, wherein each VCSEL of the plurality of VCSELs is individually addressable.
Clause 7: The sensing element of any of clauses 1-6, wherein the emitter of each VCSEL of the plurality of VCSELs is turned on and off in a predetermined sequence to provide individual emitted beams separated by angle of emission.
Clause 8: The sensing element of any of clauses 1-7, wherein the emitter of at least one VCSEL of the plurality of VCSELs is configured to emit through a top side of the sensing element.
Clause 9: The sensing element of any of clauses 1-8, wherein the emitter of at least one VCSEL of the plurality of VCSELs is configured to emit through a bottom side of the sensing element.
Clause 10: The sensing element of any of clauses 1-9, wherein the emitter of at least one VCSEL is configured to emit through a substrate at the bottom side of the sensing element.
Clause 11: The sensing element of any of clauses 1-10, wherein each photodetector comprises at least one of: a photodiode, a PIN photodiode, or any combination thereof.
Clause 12: The sensing element of any of clauses 1-11, wherein the emitter of each VCSEL of the plurality of VCSELs is connected to a respective cathode and a respective anode.
Clause 13: The sensing element of any of clauses 1-12, wherein the photodetector of each VCSEL of the plurality of VCSELs is connected to a respective cathode and a respective anode.
Clause 14: The sensing element of any of clauses 1-13, wherein the photodetector of at least one VCSEL of the plurality of VCSELs shares at least one of the respective cathode or the respective anode with the emitter of the of at least one VCSEL.
Clause 15: The sensing element of any of clauses 1-14, further comprising at least one optical element configured to at least one of: steer an emitted signal from the emitter of at least one VCSEL of the plurality of VCSELs, polarize the emitted signal from the emitter of the at least one VCSEL of the plurality of VCSELs, or any combination thereof.
Clause 16: The sensing element of any of clauses 1-15, wherein the at least one optical element comprises at least one grating configured to polarize the emitted signal from the emitter of the at least one VCSEL of the plurality of VCSELs.
Clause 17: The sensing element of any of clauses 1-16, wherein each of the at least one grating is configured to polarize the emitted signal in one direction.
Clause 18: The sensing element of any of clauses 1-17, wherein each of the at least one grating is configured to polarize the emitted signal in one of two orthogonal directions.
Clause 19: The sensing element of any of clauses 1-18, wherein the emitter of at least one VCSEL of the plurality of VCSELs is configured to emit through a bottom side of the sensing element, and wherein the at least one grating is formed on an epitaxial side of a quantum well opposite a substrate of the sensing element.
Clause 20: The sensing element of any of clauses 1-19, wherein the at least one optical element comprises at least one collimating element for each emitter of each VCSEL of the plurality of VCSELs.
Clause 21: The sensing element of any of clauses 1-20, wherein the emitter of at least one VCSEL of the plurality of VCSELs is configured to emit through a bottom side of the sensing element, and wherein the at least one collimating element is formed in a substrate of the sensing element.
Clause 22: The sensing element of any of clauses 1-21, wherein the at least one collimating element is configured to direct an emitted signal from the emitter of a respective VCSEL of the plurality of VCSELs in a respective angular offset direction relative to a normal of a surface of the sensing element.
Clause 23: The sensing element of any of clauses 1-22, wherein the at least one collimating element comprises at least one of a collimating lens, a meta-optical element, or any combination thereof.
Clause 24: The sensing element of any of clauses 1-23, wherein the at least one collimating element comprises part of a hybrid lens array attached to the sensing element.
Clause 25: The sensing element of any of clauses 1-24, wherein the sensing element is at least partially formed by at least one of a semiconductor wafer, an integrated circuit chip, or any combination thereof, and wherein the at least one collimating element is attached to the plurality of VCSELs on a wafer level or a chip level.
Clause 26: The sensing element of any of clauses 1-25, further comprising circuitry configured to disentangle the SMI signal of each VCSEL of the plurality of VCSELs by at least one of: direction, distance, polarization, velocity, or any combination thereof of at least one object in a respective direction of an emitted signal from the emitter of each VCSEL of the plurality of VCSELs.
Clause 27: The sensing element of any of clauses 1-26, wherein the sensing element is at least partially formed by at least one of a semiconductor wafer, an integrated circuit chip, or any combination thereof.
Clause 28: A method for using a sensing element comprising a plurality of vertical-cavity surface-emitting lasers (VCSELs), each comprising an emitter and a photodetector, the method comprising: emitting, with the emitter of each VCSEL of the plurality of VCSELs, an emitted signal; receiving, with each VCSEL of the plurality of VCSELs, a reflected signal based on the emitted signal; and generating, with the photodetector of each VCSEL of the plurality of VCSELs, a self-mixing interferometry (SMI) signal for each VCSEL of the plurality of VCSELs based on at least one of: the emitted signal, the reflected signal, or any combination thereof.
Clause 29: The method of clause 28, wherein the reflected signal interferes with the emitted signal to cause a modulation, and wherein the SMI signal is based on the modulation.
Clause 30: The method of clause 28 or clause 29, wherein the modulation comprises at least one of: an amplitude modulation, a frequency modulation, or any combination thereof.
Clause 31: The method of any of clauses 28-30, wherein each VCSEL of the plurality of VCSELs is individually addressable, and wherein the emitter of each VCSEL of the plurality of VCSELs is turned on and off in a predetermined sequence to provide individual emitted beams separated by angle of emission.
Clause 32: The method of any of clauses 28-31, further comprising: steering an emitted signal from the emitter of at least one VCSEL of the plurality of VCSELs with at least one collimating element.
Clause 33: The method of any of clauses 28-32, further comprising: polarizing the emitted signal from the emitter of the at least one VCSEL of the plurality of VCSELs with at least one grating.
Clause 34: The method of any of clauses 28-33, further comprising: disentangle the SMI signal of each VCSEL of the plurality of VCSELs by at least one of: direction, distance, polarization, velocity, or any combination thereof of at least one object in a respective direction of the emitted signal from the emitter of each VCSEL of the plurality of VCSELs.
Clause 35: The method of any of clauses 28-34, further comprising: generating a plurality of three-dimensional points based on the SMI signals from the plurality of VCSELs.
Clause 36: The method of any of clauses 28-35, further comprising generating a three-dimensional image based on the plurality of three-dimensional points.
Clause 37: A system, comprising: a computing device; and a sensing element connected to the computing device, the sensing element comprising: a plurality of vertical-cavity surface-emitting lasers (VCSELs), each VCSEL of the plurality of VCSELs comprising: an emitter; and a photodetector, wherein each VCSEL of the plurality of VCSELs is configured to generate a self-mixing interferometry (SMI) signal.
Clause 38: The system of clause 37, wherein the computing device comprises at least one of a smartphone, a tablet computer, a laptop computer, a desktop computer, a wearable computing device, or any combination thereof.
Clause 39: The system of clause 37 or clause 38, wherein the computing device comprises a display, and wherein the sensing element is behind the display.
Clause 40: The system of any of clauses 37-39, wherein at least one aperture is defined in the display in front of the sensing element.

These and other features and characteristics of the present disclosure, as well as the methods of operation and functions of the related elements of structures and the combination of parts and economies of manufacture, will become more apparent upon consideration of the following description and the appended claims with reference to the accompanying drawings, all of which form a part of this specification, wherein like reference numerals designate corresponding parts in the various figures. It is to be expressly understood, however, that the drawings are for the purpose of illustration and description only and are not intended as a definition of the limits of the disclosed subject matter.

### BRIEF DESCRIPTION OF THE DRAWINGS

Additional advantages and details are explained in greater detail below with reference to the non-limiting, exemplary embodiments that are illustrated in the accompanying schematic figures, in which:
FIGS. 1A-1C are schematic diagrams of a sensing element with at least one integrated detector array, according to some non-limiting embodiments or aspects;
FIG. 2 is a flow diagram of a method for using a sensing element with at least one integrated detector array, according to some non-limiting embodiments or aspects;
FIG. 3 is a schematic diagram of a system including a sensing element with at least one integrated detector array, according to some non-limiting embodiments or aspects; and
FIG. 4 is a schematic diagram of example components of a computing device, according to some non-limiting embodiments or aspects.

### DETAILED DESCRIPTION

For purposes of the description hereinafter, the terms "end," "upper," "lower," "right," "left," "vertical," "horizontal," "top," "bottom," "lateral," "longitudinal," and derivatives thereof shall relate to the embodiments as they are oriented in the drawing figures. However, it is to be understood that the present disclosure may assume various alternative variations and step sequences, except where expressly specified to the contrary. It is also to be understood that the specific devices and processes illustrated in the attached drawings, and described in the following specification, are simply exemplary and non-limiting embodiments or aspects of the disclosed subject matter. Hence, specific dimensions and other physical characteristics related to the embodiments or aspects disclosed herein are not to be considered as limiting.

Some non-limiting embodiments or aspects are described herein in connection with thresholds. As used herein, satisfying a threshold may refer to a value being greater than the threshold, more than the threshold, higher than the threshold, greater than or equal to the threshold, less than the threshold, fewer than the threshold, lower than the threshold, less than or equal to the threshold, equal to the threshold, etc.

No aspect, component, element, structure, act, step, function, instruction, and/or the like used herein should be construed as critical or essential unless explicitly described as such. Also, as used herein, the articles "a" and "an" are intended to include one or more items and may be used interchangeably with "one or more" and "at least one." Furthermore, as used herein, the term "set" is intended to include one or more items (e.g., related items, unrelated items, a combination of related and unrelated items, and/or the like) and may be used interchangeably with "one or more" or "at least one." Where only one item is intended, the term "one" or similar language is used. Also, as used herein, the terms "has," "have," "having," or the like are intended to be open-ended terms. Further, the phrase "based on" is intended to mean "based at least partially on" unless explicitly stated otherwise. In addition, reference to an action being "based on" a condition may refer to the action being "in response to" the condition. For example, the phrases "based on" and "in response to" may, in some non-limiting embodiments or aspects, refer to a condition for automatically triggering an action (e.g., a specific operation of an electronic device, such as a computing device, a processor, and/or the like).

As used herein, the term "communication" may refer to the reception, receipt, transmission, transfer, provision, and/or the like of data (e.g., information, signals, messages, instructions, commands, and/or the like). For one unit (e.g., a device, a system, a component of a device or system, combinations thereof, and/or the like) to be in communication with another unit means that the one unit is able to directly or indirectly receive information from and/or transmit information to the other unit. This may refer to a direct or indirect connection (e.g., a direct communication connection, an indirect communication connection, and/or the like) that is wired and/or wireless in nature. Additionally, two units may be in communication with each other even though the information transmitted may be modified, processed, relayed, and/or routed between the first and second unit. For example, a first unit may be in communication with a second unit even though the first unit passively receives information and does not actively transmit information to the second unit. As another example, a first unit may be in communication with a second unit if at least one intermediary unit processes information received from the first unit and communicates the processed information to the second unit. In some non-limiting embodiments or aspects, a message may refer to a network packet (e.g., a data packet and/or the like) that includes data. It will be appreciated that numerous other arrangements are possible.

As used herein, the term "computing device" may refer to one or more electronic devices configured to process data. A computing device may, in some examples, include the necessary components to receive, process, and output data, such as a processor, a display, a memory, an input device, a network interface, and/or the like. A computing device may be a mobile device. As an example, a mobile device may include a cellular phone (e.g., a smartphone or standard cellular phone), a tablet computer, a portable computer, a wearable device (e.g., watches, glasses, lenses, clothing, and/or the like), a personal digital assistant (PDA), and/or other like devices. A computing device may also be a desktop computer or other form of non-mobile computer.

As used herein, the term "system" may refer to one or more computing devices or combinations of computing devices (e.g., processors, servers, client devices, components of such, and/or the like). Reference to "a device," "a processor," and/or the like, as used herein, may refer to a previously-recited device or processor that is recited as performing a previous step or function, a different device or processor, and/or a combination of devices and/or processors. For example, as used in the specification and the claims, a first device or a first processor that is recited as performing a first step or a first function may refer to the same or different device or processor recited as performing a second step or a second function.

Non-limiting embodiments or aspects of the disclosed subject matter are directed to sensing elements with at least one integrated detector array, methods of using such sensing elements, and systems including such sensing elements. For example, a sensing element may include a plurality of (e.g., an array of) vertical-cavity surface-emitting lasers (VCSELs). Each VCSEL may include an emitter (e.g., a laser cavity) and a photodetector (e.g., a photodiode integrated into the laser cavity). Each VCSEL may be configured to generate a self-mixing interferometry (SMI) signal. In this way, a detector array separate from the emitters is not required. Instead, each emitter (e.g., laser cavity) may have a corresponding photodetector (e.g., photodiode), resulting in smaller overall dimensions of the sensing element. These reduced dimensions (e.g., reduced size) may be useful for mobile devices (e.g., smartphones, tablet computers, wearable computing devices, etc.), for example, because the size of the hole(s) on the front side of a display may be reduced. Additionally, having the photodetectors integrated with the emitters ensures the reflected signal is received at the same place from which it was emitted, thereby reducing (e.g., eliminating) parallax. Also, integrating the photodetectors with the emitters results in less complexity and expense than other detection techniques (e.g., fast 3D camera systems, etc.). In addition, having an array of multiple detectors integrated with the emitters, enables detection of not only distance and velocity of an object but also the dimensions and/or shape of the object. Moreover, by having, e.g., a two-dimensional (2D) array of individually addressable VCSEL emitters with a photodiode integrated in each VCSEL cavity, each emitter may be operated individually, thereby enabling determination of the angular direction of the emission (e.g., when using an optical element to steer the emitted signal from the emitter and/or to receive the corresponding reflected signal at different angles). When returning light is captured in the VCSEL, the distance of the reflecting point (e.g., of an object) may be determined based on the SMI signal (e.g., the amplitude and/or frequency modulation thereof). Furthermore, signals (e.g., light) may be emitted from the emitters of the array in a sequence, thereby enabling determination of a multitude of points (e.g., three-dimensional (3D) points), which can be used to generate a 3D image.

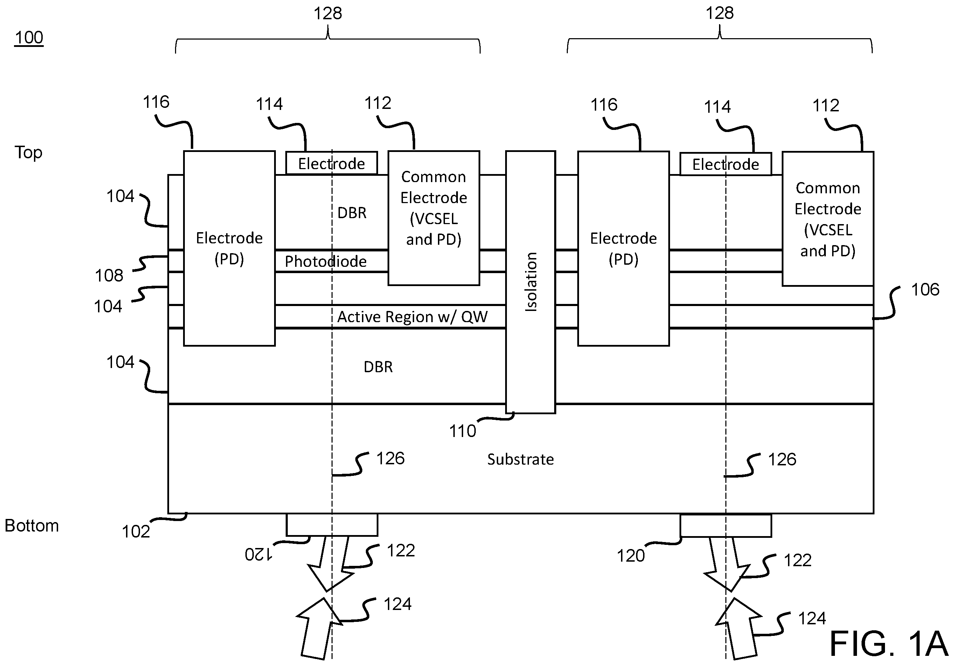

Referring now to FIGS. 1A-1C, shown is a sensing element 100 with at least one integrated detector array, according to some non-limiting embodiments or aspects. In some non-limiting embodiments or aspects, sensing element 100 may include a plurality of emitters, such as vertical-cavity surface-emitting lasers (VCSELs) 128. Each emitter (e.g., each VCSEL 128) may include a photodetector (e.g., photodiode 108). Each emitter (e.g., each VCSEL 128) may be configured to generate a self-mixing interferometry (SMI) signal, as described herein. In some non-limiting embodiments or aspects, at least some of (e.g., a subset of, all of, and/or the like) the emitters (e.g., VCSELs 128) may share a photodetector. For example, a first subset of emitters may share a first photodetector, a second subset of emitters may share a second photodetector, etc.

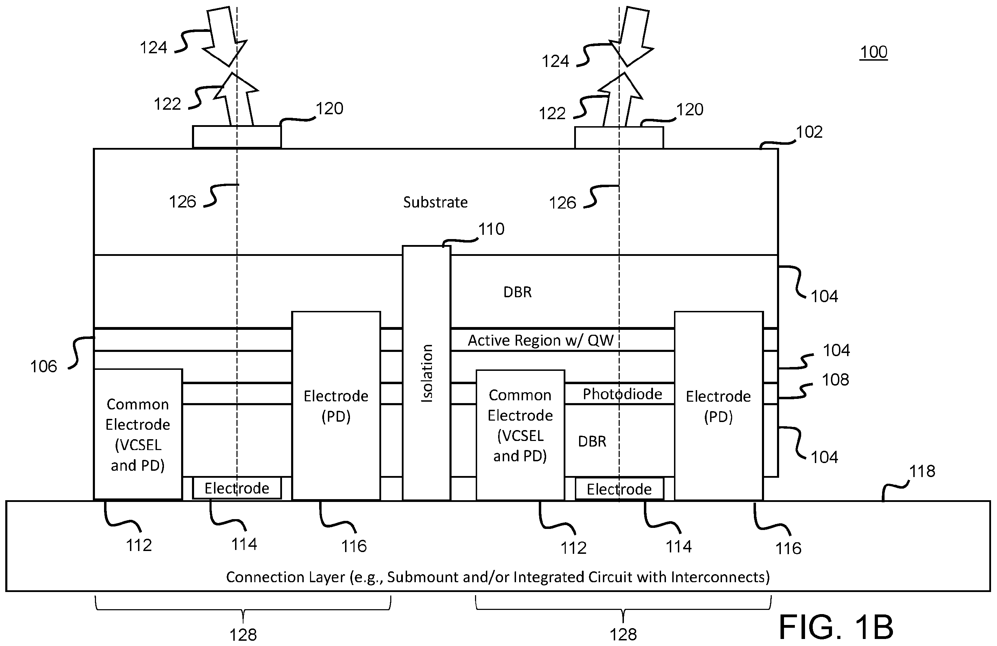

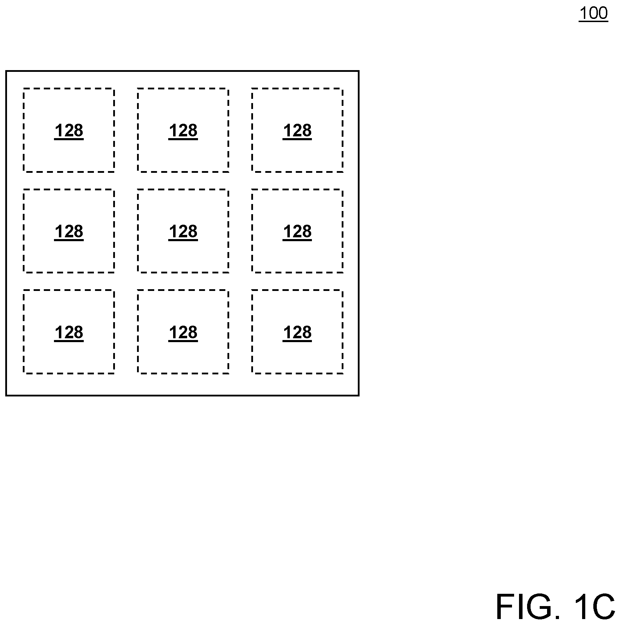

While FIGS. 1A and 1B show two VCSELs 128, it will be understood that any number of VCSELs 128 may be included in sensing element 100. In some non-limiting embodiments or aspects, the VCSELs 128 may be arranged in an array (e.g., a 2D array), as shown in FIG. 1C.

With continued reference to FIGS. 1A-1C, in some non-limiting embodiments or aspects, each VCSEL 128 may include a substrate layer 102, at least one (e.g., a plurality of) distributed Bragg reflector (DBR) layers 104, active region 106 (e.g., with a quantum well (QW)), and photodiode 108 (e.g., at least one photodiode layer). In some non-limiting embodiments or aspects, each VCSEL 128 and/or at least one layer thereof (e.g., photodiode 108) may include and/or be connected to at least one electrical connection, such as electrodes 112, 114, and 116. For example, as shown in FIGS. 1A and 1B, each VCSEL 128 may include first electrode 112 and second electrode 114, and photodiode 108 may be connected to first electrode 112 and third electrode 116. In the example shown in FIGS. 1A and 1B, first electrode 112 is shared between VCSEL 128 and photodiode 108, while second electrode 114 may be connected to VCSEL 128 and third electrode 116 may be connected to photodiode 108. Other arrangements are possible. For example, each VCSEL 128 may be connected to a respective cathode and a respective anode, and each photodiode 108 may be connected to a respective cathode and a respective anode separate from the cathode and anode of VCSEL 128. Additionally or alternatively, photodiode 108 of at least one VCSEL 128 may share at least one of the respective cathode or the respective anode with the emitter of VCSEL 128. In some non-limiting embodiments or aspects, substrate layer 102 may be considered a bottom layer, and each of the other layers (e.g., DBR layer(s) 104, active region 106, and photodiode 108) may be formed (e.g., epitaxially deposited and/or the like) on top of substrate layer 102. For example, sensing element 100 (e.g., including substrate layer 102, DBR layer(s) 104, active region 106, photodiode 108, and electrodes 112, 114, and 116) may be inverted (e.g., flipped over) before being connected to connection layer 118.

In some non-limiting embodiments or aspects, connection layer 118 may include a submount layer and/or an integrated circuit (IC) with interconnects to connect to electrodes 112, 114, 116 of sensing element 100. In some non-limiting embodiments or aspects, connection layer 118 may connect sensing element 100 to other components of a computing device and/or system, as described herein.

In some non-limiting embodiments or aspects, each VCSEL 128 may be separated from at least one adjacent VCSEL 128 by an isolation layer 110. For example, isolation layer 110 may include an insulating layer that separates adjacent VCSELs 128 and/or components thereof, e.g., to prevent interference and/or leakage between the adjacent VCSELs 128.

In some non-limiting embodiments or aspects, each VCSEL 128 may be configured to emit emitted signal 122 (e.g., light, such as laser light). Additionally, each VCSEL 128 may be configured to receive reflected signal 124 based on emitted signal 122. The photodetector (e.g., photodiode 108) of each VCSEL 128 may be configured to generate an SMI signal based on at least one of emitted signal 122, reflected signal 124, or any combination thereof. For example, reflected signal 124 may interfere with emitted signal 122 to cause a modulation. The SMI signal may be based on the modulation (e.g., of emitted signal 122 in the laser cavity of VCSEL 128). In some non-limiting embodiments or aspects, the modulation may include at least one of an amplitude modulation, a frequency modulation, or any combination thereof. In some non-limiting embodiments or aspects, the SMI signal may be based on the power, the threshold current, and/or the operating voltage of VCSEL 128 (e.g., which may change as a result of the interference and/or the modulation). For example, the power, the threshold current, and/or the operating voltage of each VCSEL 128 may be measured based on connections to electrode(s) 112, 114, and/or 116 of each VCSEL 128.

In some non-limiting embodiments or aspects, each VCSEL 128 may be individually addressable. For example, the emission of each VCSEL 128 may be switched on and off in a sequence (e.g., a predetermined sequence, a selected sequence, and/or the like) to provide individual emitted signals 122 separated by angle of emission, as described herein. In some non-limiting embodiments or aspects, the sequence may include switching (e.g., turning on then off) each VCSEL 128 sequentially (e.g., one after the other until each VCSEL 128 in an array has been turned on and then off). Additionally or alternatively, any suitable sequence may be used. In some non-limiting embodiments or aspects, the switching of each VCSEL 128 may be controlled by at least one switching element, such as a pseudomorphic high-electron-mobility-transistor (pHEMT), a high-electron-mobility transistor (HEMT), a metal-semiconductor field-effect transistor (MESFET), a heterostructure field-effect transistor (HFET), a heterojunction bipolar transistor (HBT), any other suitable transistor, an integrated thyristor, any other suitable thyristor, or any combination thereof.

In some non-limiting embodiments or aspects, each VCSEL 128 may be bottom side emitting (BSE) or top side emitting (TSE). For example, at least one VCSEL 128 may be configured to emit through a top side of sensing element 100 (e.g., which may be the bottom of the drawing in FIG. 1B, if sensing element 100 was inverted before connecting to connection layer 118). Additionally or alternatively, at least one VCSEL 128 may be configured to emit through a bottom side of sensing element 100 (e.g., which may be the top of the drawing in FIG. 1B, if sensing element 100 was inverted before connecting to connection layer 118). For example, for BSE, VCSEL 128 may be configured to emit through substrate layer 102 at the bottom side of sensing element 100. In some non-limiting embodiments or aspects, for BSE, photodiode 108 of VCSEL 128 may be towards the epitaxial side (e.g., the top side, the opposite side from substrate layer 102, and/or the like) relative to active region 106 of VCSEL 128, not the substrate side (e.g., the bottom side).

In some non-limiting embodiments or aspects, photodiode 108 may include a PIN photodiode, where "P" refers to p-type semiconductor, "I" refers to intrinsic semiconductor, and "N" refers to n-type semiconductor. For example, a PIN photodiode may include at least three layers, including a P layer (e.g., a p-type semiconductor layer), an intrinsic layer, and an N layer (e.g., an n-type semiconductor layer). In some non-limiting embodiments or aspects, photodiode 108 may include a P-N photodiode (e.g., with a P layer and an N layer, which may have a depletion region therebetween) or any other suitable photodiode.

In some non-limiting embodiments or aspects, at least one optical element 120 may be configured to perform at least one of: steering emitted signal 122 from the emitter (e.g., VCSEL 128), polarizing emitted signal 122 from the emitter (e.g., VCSEL 128), or any combination thereof.

In some non-limiting embodiments or aspects, optical element(s) 120 may include at least one grating configured to polarize emitted signal 122 from the emitter (e.g., VCSEL 128). In some non-limiting embodiments or aspects, each grating may be configured to polarize emitted signal 122 in one direction. In some non-limiting embodiments or aspects, each grating may be configured to polarize emitted signal 122 in one of two orthogonal directions. For example, one or more gratings may be configured to polarize emitted signal 122 from one or more VCSELs in a first direction, and one or more other gratings (e.g., the rest of the gratings) may be configured to polarize emitted signal 122 from one or more other VCSELs in a second direction orthogonal to the first direction. In some non-limiting embodiments, two emitters (e.g., VCSELs) that have orthogonal directions of polarization may be operated (e.g., switch on) simultaneously, which can increase speed of acquisition or resolution.

In some non-limiting embodiments or aspects, for TSE, each grating may be placed on the top layer (e.g., on top of DBR layer 104 opposite the substrate), which may be on top of the emitter (e.g., VCSEL 128). For BSE, the grating may be placed inside the cavity (e.g., of VCSEL 128) and/or in DBR layer 104. Additionally or alternatively, for BSE, the grating may be formed on an epitaxial side (e.g., top side, side opposite the substrate, and/or the like) of active region 106 (e.g., a quantum well).

In some non-limiting embodiments or aspects, the at least one optical element 120 may include at least one collimating element for each emitter (e.g., VCSEL 128). In some non-limiting embodiments or aspects, the collimating element may be configured to direct emitted signal 122 from the emitter (e.g., VCSEL 128) in a respective angular offset direction relative to a normal 126 of a surface of sensing element 100 (e.g., a bottom surface of sensing element 100, a top surface of sensing element 100, a surface of substrate layer 102, and/or the like).

In some non-limiting embodiments or aspects, the collimating element may include at least one of a collimating lens, a meta-optical element, or any combination thereof. In some non-limiting embodiments or aspects, the collimating element may include part of a hybrid lens array attached to sensing element 100 (e.g., to a surface of sensing element 100).

In some non-limiting embodiments or aspects, for BSE, the collimating element may be formed in substrate layer 102 and/or on a bottom side of substrate layer 102.

In some non-limiting embodiments or aspects, sensing element 100 may be at least partially formed by (and/or at least a part of) at least one of a semiconductor wafer, an integrated circuit chip, or any combination thereof. For example, the collimating element may be attached to VCSELs 128 on a wafer level or a chip level.

In some non-limiting embodiments or aspects, sensing element 100 may include and/or be connected to (e.g., electrically connected via electrodes 112, 114, and 116 and/or connection layer 118; communicatively connected, and/or the like) circuitry (e.g., a processor, a computing device, and/or the like). For example, the circuitry may be configured to disentangle the SMI signal of each VCSEL 128 by at least one of: direction, distance, polarization, velocity, or any combination thereof of at least one object in a respective direction of emitted signal 122 from the emitter (e.g., VCSEL 128). Additionally or alternatively, the circuitry may be configured to generate a plurality of 3D points based on the SMI signals from VCSELs 128 (e.g., based on the direction, distance, polarization, and/or velocity of the object from which reflected signal 124 was reflected). In some non-limiting embodiments or aspects, the circuitry may be configured to generate a 3D image based on the plurality of three-dimensional points. For example, the SMI signal may be based on the measured power, threshold current, and/or operating voltage of each VCSEL 128, which may be connected to the circuitry (e.g., processor, computing device, and/or the like) via electrode(s) 112, 114, and/or 116 of each VCSEL 128 and/or connection layer 118.

The number and arrangement of components shown in FIGS. 1A-1C are provided as an example. There may be additional components, fewer components, different components, and/or differently arranged components than those shown in FIGS. 1A-1C. Furthermore, two or more components shown in FIGS. 1A-1C may be implemented within a single component, or a single component shown in FIGS. 1A-1C may be implemented as multiple, distributed components. Additionally or alternatively, a set of components (e.g., one or more components) of sensing element 100 may perform one or more functions described as being performed by another set of components of sensing element 100.

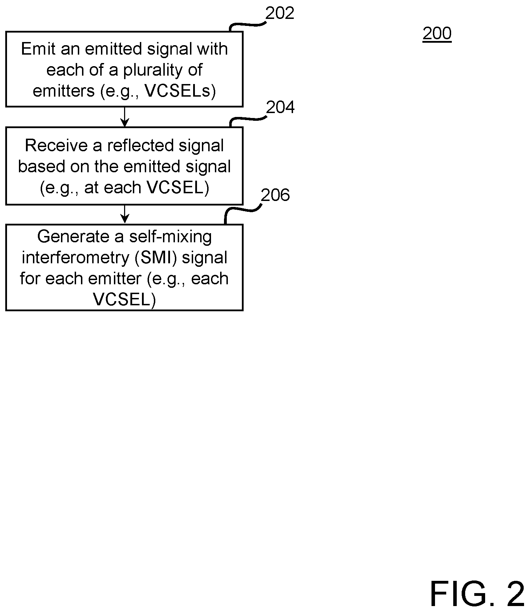

Referring now to FIG. 2, and with continued reference to FIG. 1, FIG. 2 shows a flow diagram for a method 200 for using a sensing element with at least one integrated detector array, according to some non-limiting embodiments or aspects. The steps shown in FIG. 2 are for example purposes only. It will be appreciated that additional, fewer, different, and/or a different order of steps may be used in some non-limiting embodiments or aspects. In some non-limiting embodiments or aspects, a step may be automatically performed in response to performance and/or completion of a prior step.

As shown in FIG. 2, at step 202, method 200 may include emitting an emitted signal with each of a plurality of emitters (e.g., VCSELs). For example, each VCSEL 128 may emit emitted signal 122 (e.g., in a sequence and/or the like), as described herein.

In some non-limiting embodiments or aspects, each VCSEL 128 may be individually addressable, as described herein. The emitter of each VCSEL 128 may be switched on and off (e.g., turned on and off) in a sequence to provide individual emitted beams separated by angle of emission, as described herein.

In some non-limiting embodiments or aspects, emitted signal 122 from at least one VCSEL 128 may be steered. For example, emitted signal 122 may be steered with at least one collimating element, as described herein.

In some non-limiting embodiments or aspects, emitted signal 122 from at least one VCSEL 128 may be polarized. For example, emitted signal 122 may be polarized with at least one grating, as described herein.

As shown in FIG. 2, at step 204, method 200 may include receiving a reflected signal based on the emitted signal (e.g., at each VCSEL). For example, each VCSEL 128 may receive reflected signal 124 based on emitted signal 122, as described herein.

As shown in FIG. 2, at step 204, method 200 may include generating an SMI signal for each emitter (e.g., each VCSEL). For example, the photodetector (e.g., photodiode 108) of each VCSEL 128 may generate an SMI signal for the respective VCSEL 128 based on at least one of emitted signal 122, reflected signal 124, or any combination thereof, as described herein.

In some non-limiting embodiments or aspects, reflected signal 124 may interfere with emitted signal 122 to cause a modulation, as described herein. The SMI signal may be based on the modulation. For example, the modulation may include at least one of an amplitude modulation, a frequency modulation, or any combination thereof.

In some non-limiting embodiments or aspects, the SMI signal of each VCSEL 128 may be disentangled by at least one of: direction, distance, polarization, and/or velocity of at least one object in a respective direction of emitted signal 122 from the respective VCSEL 128, as described herein.

In some non-limiting embodiments or aspects, a plurality of 3D points may be generated based on the SMI signals from the plurality of VCSELs 128, as described herein. In some non-limiting embodiments or aspects, a three-dimensional image may be generated based on the 3D points, as described herein.

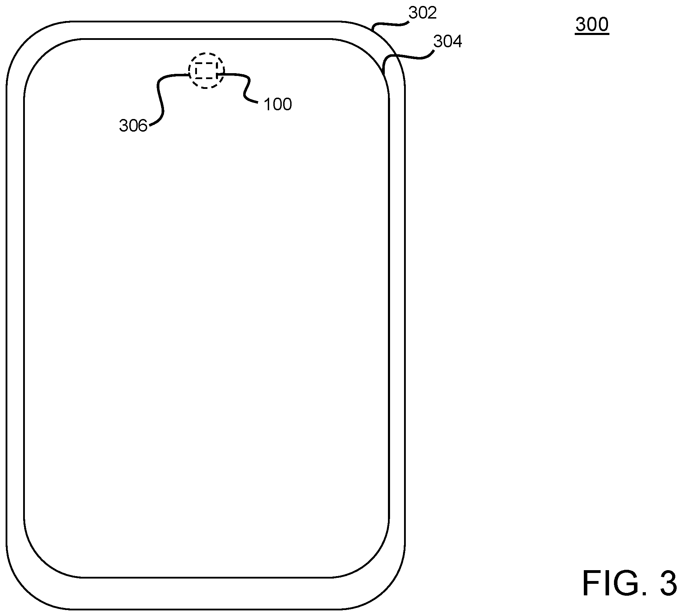

Referring now to FIG. 3, shown is a system 300 including a sensing element with at least one integrated detector array, according to some non-limiting embodiments or aspects. In some non-limiting embodiments or aspects, system 300 may include computing device 302, which may include and/or be connected to sensing element 100.

In some non-limiting embodiments or aspects, computing device 302 may include at least one of a smartphone, a tablet computer, a laptop computer, a desktop computer, a wearable computing device, any combination thereof, and/or the like.

In some non-limiting embodiments or aspects, computing device 302 may include display 304. For example, display 304 may include a display, a touch screen display, any combination thereof, and/or the like.

In some non-limiting embodiments or aspects, sensing element 100 may be behind display 304. For example, at least one aperture 306 is defined in display 304 in front of sensing element 100. In some non-limiting embodiments or aspects, because sensing element 100 includes an integrated detector array (e.g., photodiode 108 in each VCSEL 128 of an array of VCSELs 128), the size of sensing element 100 may be reduced, thereby allowing aperture 306 to be reduced in size. This reduction in size may result in the non-useable area of display 304 being reduced, thereby improving the appearance and functionality of display 304 and/or computing device 302.

In some non-limiting embodiments or aspects, computing device 302 (e.g., a processor thereof) may receive the SMI signals for each emitter (e.g., each VCSEL 128) from sensing element 100, as described herein. For example, computing device 302 may be connected to sensing element 100 via electrodes 112, 114, and 116 and/or connection layer 118.

In some non-limiting embodiments or aspects, computing device 302 (e.g., a processor thereof) may disentangle the SMI signal of each VCSEL 128 by at least one of direction, distance, polarization, and/or velocity of at least one object in a respective direction of emitted signal 122 from the respective VCSEL 128, as described herein.

In some non-limiting embodiments or aspects, computing device 302 (e.g., a processor thereof) may generate a plurality of 3D points based on the SMI signals from the plurality of VCSELs 128, as described herein. Additionally or alternatively, computing device 302 (e.g., a processor thereof) may generate a 3D image (e.g., based on the 3D points), as described herein.

The number and arrangement of components shown in FIG. 3 are provided as an example. There may be additional components, fewer components, different components, and/or differently arranged components than those shown in FIG. 3. Furthermore, two or more components shown in FIG. 3 may be implemented within a single component, or a single component shown in FIG. 3 may be implemented as multiple, distributed components. Additionally or alternatively, a set of components (e.g., one or more components) of system 300 may perform one or more functions described as being performed by another set of components of system 300.

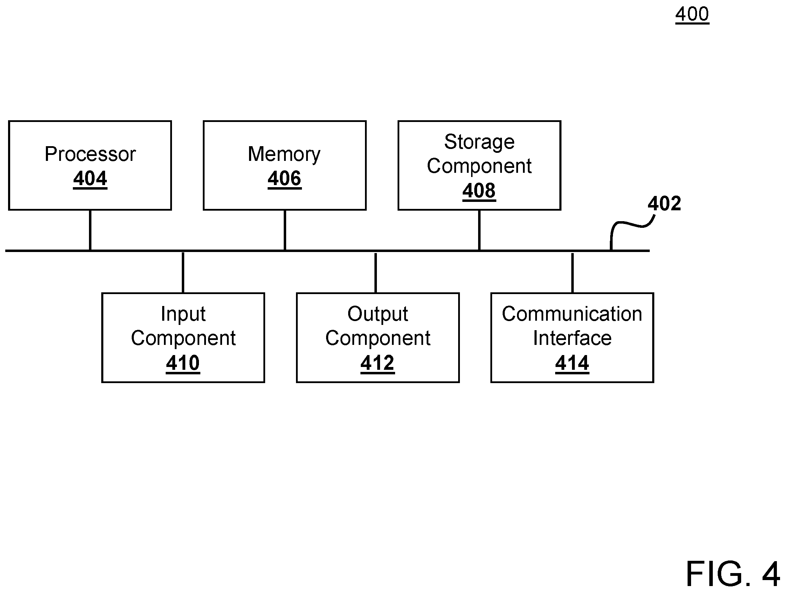

Referring now to FIG. 4, shown is a diagram of example components of a computing device 400, according to some non-limiting embodiments or aspects. Computing device 400 may correspond to system 300, as an example. In some non-limiting embodiments or aspects, system 300 may include at least one computing device 400 and/or at least one component of computing device 400. The number and arrangement of components shown are provided as an example. In some non-limiting embodiments, computing device 400 may include additional components, fewer components, different components, or differently arranged components than those shown. Additionally or alternatively, a set of components (e.g., one or more components) of computing device 400 may perform one or more functions described as being performed by another set of components of computing device 400.

As shown in FIG. 4, computing device 400 may include bus 402, processor 404, memory 406, storage component 408, input component 410, output component 412, and/or communication interface 414. Bus 402 may include a component that permits communication among the components of computing device 400. In some non-limiting embodiments, processor 404 may be implemented in hardware, firmware, or a combination of hardware and software. For example, processor 404 may include a processor (e.g., a central processing unit (CPU), a graphics processing unit (GPU), an accelerated processing unit (APU), etc.), a microprocessor, a digital signal processor (DSP), and/or any processing component (e.g., a field-programmable gate array (FPGA), an application-specific integrated circuit (ASIC), etc.) that can be programmed to perform a function. Memory 406 may include random access memory (RAM), read only memory (ROM), and/or another type of dynamic or static storage device (e.g., flash memory, magnetic memory, optical memory, etc.) that stores information and/or instructions for use by processor 404.

With continued reference to FIG. 4, storage component 408 may store information and/or software related to the operation and use of computing device 400. For example, storage component 408 may include a hard disk (e.g., a magnetic disk, an optical disk, a magneto-optic disk, a solid-state disk, etc.) and/or another type of computer-readable medium. Input component 410 may include a component that permits computing device 400 to receive information, such as via user input (e.g., a touch screen display, a keyboard, a keypad, a mouse, a button, a switch, a microphone, etc.). Additionally or alternatively, input component 410 may include a sensor for sensing information (e.g., a global positioning system (GPS) component, an accelerometer, a gyroscope, an actuator, etc.). Output component 412 may include a component that provides output information from computing device 400 (e.g., a display, a speaker, one or more light-emitting diodes (LEDs), etc.). Communication interface 414 may include a transceiver-like component (e.g., a transceiver, a separate receiver and transmitter, etc.) that enables computing device 400 to communicate with other devices, such as via a wired connection, a wireless connection, or a combination of wired and wireless connections. Communication interface 414 may permit computing device 400 to receive information from another device and/or provide information to another device. For example, communication interface 414 may include an Ethernet interface, an optical interface, a coaxial interface, an infrared interface, a radio frequency (RF) interface, a universal serial bus (USB) interface, a Wi-Fi^{®} interface, a cellular network interface, and/or the like.

Computing device 400 may perform one or more processes described herein. Computing device 400 may perform these processes based on processor 404 executing software instructions stored by a computer-readable medium, such as memory 406 and/or storage component 408. A computer-readable medium may include any non-transitory memory device. A memory device includes memory space located inside of a single physical storage device or memory space spread across multiple physical storage devices. Software instructions may be read into memory 406 and/or storage component 408 from another computer-readable medium or from another device via communication interface 414. When executed, software instructions stored in memory 406 and/or storage component 408 may cause processor 404 to perform one or more processes described herein. Additionally or alternatively, hardwired circuitry may be used in place of or in combination with software instructions to perform one or more processes described herein. Thus, embodiments described herein are not limited to any specific combination of hardware circuitry and software. The term "configured to," as used herein, may refer to an arrangement of software, device(s), and/or hardware for performing and/or enabling one or more functions (e.g., actions, processes, steps of a process, and/or the like). For example, "a processor configured to" may refer to a processor that executes software instructions (e.g., program code) that cause the processor to perform one or more functions.

Although embodiments have been described in detail for the purpose of illustration, it is to be understood that such detail is solely for that purpose and that the disclosure is not limited to the disclosed embodiments or aspects, but, on the contrary, is intended to cover modifications and equivalent arrangements that are within the spirit and scope of the appended claims. For example, it is to be understood that the present disclosure contemplates that, to the extent possible, one or more features of any embodiment or aspect can be combined with one or more features of any other embodiment or aspect.

## Claims

1. A sensing element with at least one integrated detector array, comprising:
a plurality of vertical-cavity surface-emitting lasers (VCSELs), each VCSEL of the plurality of VCSELs comprising:
an emitter; and
a photodetector,
wherein each VCSEL of the plurality of VCSELs is configured to generate a self-mixing interferometry (SMI) signal,
optionally wherein each photodetector comprises at least one of: a photodiode, a PIN photodiode, or any combination thereof.

2. The sensing element of claim 1, wherein the emitter of each VCSEL of the plurality of VCSELs is configured to emit an emitted signal, wherein each VCSEL of the plurality of VCSELs is configured to receive a reflected signal based on the emitted signal, and wherein the photodetector of each VCSEL of the plurality of VCSELs is configured to generate the SMI signal based on at least one of: the emitted signal, the reflected signal, or any combination thereof,
optionally wherein the reflected signal interferes with the emitted signal to cause a modulation, and wherein the SMI signal is based on the modulation, and
more particularly wherein the modulation comprises at least one of: an amplitude modulation, a frequency modulation, or any combination thereof.

3. The sensing element of claim 1 or claim 2, wherein:
the plurality of VCSELs is arranged in an array; and/or
each VCSEL of the plurality of VCSELs is individually addressable, optionally wherein the emitter of each VCSEL of the plurality of VCSELs is turned on and off in a predetermined sequence to provide individual emitted beams separated by angle of emission.

4. The sensing element of any of the preceding claims, wherein the emitter of at least one VCSEL of the plurality of VCSELs is configured to emit through a top side of the sensing element, and/or wherein the emitter of at least one VCSEL of the plurality of VCSELs is configured to emit through a bottom side of the sensing element, optionally through a substrate at the bottom side of the sensing element.

5. The sensing element of any of the preceding claims, wherein the emitter of each VCSEL of the plurality of VCSELs is connected to a respective cathode and a respective anode, optionally wherein:
the photodetector of each VCSEL of the plurality of VCSELs is connected to a cathode and an anode; and/or
the photodetector of at least one VCSEL of the plurality of VCSELs shares at least one of the respective cathode or the respective anode with the emitter of the at least one VCSEL.

6. The sensing element of the preceding claims, further comprising:
at least one optical element configured to at least one of: steer an emitted signal from the emitter of at least one VCSEL of the plurality of VCSELs, polarize the emitted signal from the emitter of the at least one VCSEL of the plurality of VCSELs, or any combination thereof; and/or
circuitry configured to disentangle the SMI signal of each VCSEL of the plurality of VCSELs by at least one of: direction, distance, polarization, velocity, or any combination thereof of at least one object in a respective direction of an emitted signal from the emitter of each VCSEL of the plurality of VCSELs

7. The sensing element of claim 6, wherein the at least one optical element comprises at least one grating configured to polarize the emitted signal from the emitter of the at least one VCSEL of the plurality of VCSELs, optionally wherein:
each of the at least one grating is configured to polarize the emitted signal in one direction; and/or
each of the at least one grating is configured to polarize the emitted signal in one of two orthogonal directions; and/or
the emitter of the at least one VCSEL of the plurality of VCSELs is configured to emit through a bottom side of the sensing element, and the at least one grating is formed on an epitaxial side of a quantum well opposite a substrate of the sensing element.

8. The sensing element of claim 6 or claim 7, wherein the at least one optical element comprises at least one collimating element for each emitter of each VCSEL of the plurality of VCSELs, optionally wherein:
the emitter of the at least one VCSEL of the plurality of VCSELs is configured to emit through a bottom side of the sensing element, and the at least one collimating element is formed in a substrate of the sensing element; and/or
the at least one collimating element is configured to direct an emitted signal from the emitter of a respective VCSEL of the plurality of VCSELs in a respective angular offset direction relative to a normal of a surface of the sensing element; and/or
the at least one collimating element comprises at least one of a collimating lens, a meta-optical element, or any combination thereof; and/or
the at least one collimating element comprises part of a hybrid lens array attached to the sensing element.

9. The sensing element of any of the preceding claims, wherein the sensing element is at least partially formed by at least one of a semiconductor wafer, an integrated circuit chip, or any combination thereof, and optionally wherein when present the at least one collimating element is attached to the plurality of VCSELs on a wafer level or a chip level.

10. A method for using a sensing element comprising a plurality of vertical-cavity surface-emitting lasers (VCSELs), each comprising an emitter and a photodetector, the method comprising:
emitting, with the emitter of each VCSEL of the plurality of VCSELs, an emitted signal;
receiving, with each VCSEL of the plurality of VCSELs, a reflected signal based on the emitted signal; and
generating, with the photodetector of each VCSEL of the plurality of VCSELs, a self-mixing interferometry (SMI) signal for each VCSEL of the plurality of VCSELs based on at least one of: the emitted signal, the reflected signal, or any combination thereof.

11. The method of claim 10, wherein the reflected signal interferes with the emitted signal to cause a modulation, wherein the SMI signal is based on the modulation, optionally wherein the modulation comprises at least one of: an amplitude modulation, a frequency modulation, or any combination thereof.

12. The method of claim 10 or claim 11, wherein each VCSEL of the plurality of VCSELs is individually addressable, and wherein the emitter of each VCSEL of the plurality of VCSELs is turned on and off in a predetermined sequence to provide individual emitted beams separated by angle of emission.

13. The method of any of claims 10-12, further comprising at least one of:
steering an emitted signal from the emitter of at least one VCSEL of the plurality of VCSELs with at least one collimating element;
polarizing the emitted signal from the emitter of at least one VCSEL of the plurality of VCSELs with at least one grating;
disentangling the SMI signal of each VCSEL of the plurality of VCSELs by at least one of: direction, distance, polarization, velocity, or any combination thereof of at least one object in a respective direction of the emitted signal from the emitter of each VCSEL of the plurality of VCSELs; and
generating a plurality of three-dimensional points based on the SMI signals from the plurality of VCSELs, and optionally generating a three-dimensional image based on the plurality of three-dimensional points.

14. A system, comprising:
a computing device; and
a sensing element connected to the computing device, the sensing element comprising:
a plurality of vertical-cavity surface-emitting lasers (VCSELs), each VCSEL of the plurality of VCSELs comprising:
an emitter; and
a photodetector,
wherein each VCSEL of the plurality of VCSELs is configured to generate a self-mixing interferometry (SMI) signal.

15. The system of claim 14, wherein:
the computing device comprises at least one of a smartphone, a tablet computer, a laptop computer, a desktop computer, a wearable computing device, or any combination thereof; and/or
the computing device comprises a display, and wherein the sensing element is behind the display, optionally wherein at least one aperture is defined in the display in front of the sensing element .
